(19) **Europäisches Patentamt**
**European Patent Office**
**Office européen des brevets**

(11) **EP 1 841 824 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(21) Anmeldenummer: **06710242.6**

(22) Anmeldetag: **20.01.2006**

(51) Int Cl.:
*C08L 77/00* (2006.01)    *C08L 77/02* (2006.01)
*C08L 77/06* (2006.01)    *C08L 77/12* (2006.01)

(86) Internationale Anmeldenummer:
**PCT/IB2006/000091**

(87) Internationale Veröffentlichungsnummer:
**WO 2006/079890 (03.08.2006 Gazette 2006/31)**

(54) **HOCHVISKOSE FORMMASSEN AUF BASIS VON THERMOPLASTISCHEN POLYMEREN SOWIE DEREN VERWENDUNG**

HIGHLY VISCOSE THERMOPLASTIC POLYMER-BASED MOULDING COMPOUNDS AND THE USE THEREOF

MATIERES MOULABLES A VISCOSITE ELEVEE A BASE DE POLYMERES THERMOPLASTIQUES ET LEUR UTILISATION

(84) Benannte Vertragsstaaten:
**DE FR GB**

(30) Priorität: **27.01.2005 PCT/IB2005/000211**

(43) Veröffentlichungstag der Anmeldung:
**10.10.2007 Patentblatt 2007/41**

(73) Patentinhaber: **EMS-CHEMIE AG**
**7013 Domat-Ems (CH)**

(72) Erfinder:
• **HOFFMANN, Botho**
**CH-7013 Domat/Ems (CH)**
• **BAYER, Marcus**
**CH-7402 Bonaduz (CH)**
• **BAYER, Andreas**
**CH-7012 Felsberg (CH)**

(74) Vertreter: **Reitzle, Helmut**
**Pfenning, Meinig & Partner GbR**
**Patent- und Rechtsanwälte**
**Theresienhöhe 13**
**80339 München (DE)**

(56) Entgegenhaltungen:
**EP-A- 0 494 449     EP-A- 0 555 197**
**EP-A- 0 559 284     EP-A- 0 592 941**
**EP-A- 1 029 896     DE-A1- 4 235 505**
**US-A- 5 369 171     US-A- 5 446 109**
**US-A1- 2004 030 023     US-B1- 6 211 266**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft hochviskose Formmassen auf Basis von Polyamiden und/oder Copolymeren mit mindestens 20 Gew.-% Polyamid-Bausteinen, wie z.B. Polyesteramiden, Polyetheresteramiden, Polyetheramiden, mit hoher Schmelzefestigkeit und sehr guter Schlagzähigkeit bei tiefen Temperaturen. Die vorliegende Erfindung betrifft insbesondere hochviskose Polyamidformmassen aus Mischungen zweier unterschiedlicher Viskositäten eines Polyamids, die eine hohe Schmelzefestigkeit von über 18 Sekunden (bei 230 °C) und eine Kerbschlagzähigkeit von mindestens 9 (Raumtemperatur; ISO 179) bzw. von mindestens 7 kJ/m$^2$ (ISO 179; -30 °C) besitzen. Die erfindungsgemässen hochviskosen Polyamidformmassen sind insbesondere zur Herstellung von Rohren mit grossem Durchmesser z. B. mittels der klassischen Verarbeitungsmethoden wie der Rohrextrusion, d. h. von grösser 20 mm Aussendurchmesser, insbesondere von grösser 30 mm Aussendurchmesser, geeignet, da neben den guten Gebrauchseigenschaften, z.B. Schlagzähigkeit, auch das Verarbeitungsverhalten bei der Extrusion optimal ist. Die erfindungsgemässen Rohre zeigen dabei eine sehr gleichmässige Wanddicke, weil es praktisch nicht zu einem "Sagging" kommt. Sagging nennt man das Verhalten, wenn der noch geschmolzene Kunststoff während der Kalibrationsphase durch die Gravitation nach unten fliesst und somit Wanddickenunterschiede zwischen unten und oben entstehen. Aus diesem Grund versucht man die Schmelzefestigkeit so hoch wie möglich zu setzen. Dies erreicht man im allgemeinen durch die Erhöhung der Schmelzeviskosität durch ein höheres Molekulargewicht oder durch Zugabe von viskositätserhöhenden Additiven.

Die erfindungsgemässen ein- oder mehrschichtigen Rohre können z.B. für den Transport von Fluiden wie Gas, insbesondere Brenngas, chemischen Stoffen oder im Offshore-Bereich verwendet werden.

Zur Herstellung der in der vorliegenden Anmeldung angesprochenen hochviskosen bzw. hochmolekularen Polyamide mit einem zahlenmittleren Molekulargewicht ($M_n$) > 30.000 g/mol können dem Fachmann bekannte Verfahren angewandt werden, wie sie z.B. im Kunststoff-Handbuch 3/4, Polyamide, Carl Hanser Verlag, München 1998 (insbesondere Seiten 3-6, 32, 45-51, 651-658), oder im Patent CH 359 286 beschrieben sind.

Ein bekanntes Verfahren zur Herstellung solcher Polyamide ist die Festphasennachkondensation von granulierten niederviskosen Polymeren zu hochviskosem Polyamid bei einer Temperatur, die niedriger ist als die Schmelztemperatur, beschrieben beispielsweise in CH 359 286 sowie den US-Patentschriften 21 43 944 und 38 21 171, sowie in DE-Patentschrift 12 10 183 und DD-Patentschrift 91 566.

Normalerweise wird die Festphasennachkondensation von Polyamiden in einem diskontinuierlich oder kontinuierlich arbeitenden Trockner unter Inertgas oder Vakuum durchgeführt. Diese Methode erlaubt die Herstellung von Polyamiden mit sehr hoher Relativ-Viskosität.

Eine andere Möglichkeit zur Herstellung von hochviskosen Polyamiden ist die kontinuierliche Nachkondensation in der Schmelze unter Einsatz der verschiedenartigen Schneckenapparaturen.

Darüber hinaus ist der Zugang zu hochviskosen Polyamiden durch Einsatz aufbauender Additive möglich.

WO 00/66650 (Brüggemann KG) beschreibt beispielsweise den Zugang zu hochviskosen Polyamiden durch aufbauende Additive, speziell mit mindestens zwei Carbonateinheiten, wobei die Aufbereitung von Recyclaten das primäre Anwendungsfeld darstellt. Es wird eine erhöhte Schmelzeviskosität ohne Scherung bei gleicher Schmelzeviskosität unter Scherbeanspruchung theoretisch als vorteilhaft für Extrusion und Spritzguss beschrieben, was jedoch nicht durch die weitere Beschreibung offenbart wird. Im Widerspruch dazu wird die Wirksamkeit des Polyamidaufbaus anhand des zunehmenden Drehmoments des Kneters nachgewiesen.

DE 103 37 707 (Degussa AG) beschreibt ebenfalls den Einsatz des in WO 00/66650 beschriebenen Additivs zur Erhöhung der relativen Viskosität, wobei zusätzlich herstellungsbedingt ein Phosphorkatalysator sowie zur Deaktivierung ein Salz einer schwachen Säure eingesetzt wird. Dieses Material soll beispielsweise für die Extrusion von Rohren verwendet werden, jedoch wird auf die Problematik der Schmelzefestigkeit nicht eingegangen.

WO 01/66633 (DSM N.V.) und WO 03/066 704 (Johnson Polymers, LLC) stellen weitere aufbauende Additive vor. Der Einsatz in Polyamiden wird jedoch nur oberflächlich, ein Einfluss auf die Extrusionsbedingungen wird nicht beschrieben. Weitere Additive zur Erhöhung der Viskosität werden beispielsweise beschrieben in WO 09/847940A1, JP-A-0197526, JP-A-01236238, DE-B-2458733 und WO 09/634909A1.

Mit den oben offenbarten Formmassen sind prinzipiell schmelzefeste Formulierungen herstellbar. Allerdings benötigen diese hochviskosen Formmassen bei der Extrusion eine sehr hohe Stromaufnahme bzw. ein sehr hohes Drehmoment und der Druck an der Düse ist sehr hoch.

Einen anderen Weg zeigt EP 0 559 284 (ECP Enichem Polimeri S.R.I) zum Zugang von kälteschlagzähem Material. Formmassen aus Copolyetheramid und funktionalisierten olefinischem und/oder diolefinischem Polymer sowie optional nichtfunktionalisierten olefinischem und/oder diolefinischem Polymer zeigen hohe Izod-Schlagwerte bei -30°C und verbesserte Fliessfähigkeit in der Schmelze. Die offenbarten M.F.I-Werte kennzeichnen jedoch mittelviskose Formmassen, die für die Extrusion grosser Durchmesser ungeeignet sind.

Formulierungen aus zwei gleichen Polyamiden mit unterschiedlichen Molmassen sind ebenfalls Stand der Technik. So wurde in der JP 61-179258 A (DAISERU HIYURUSU KK), zitiert als Abstrakt, eine Polyamidformmasse beschrieben, die aus zwei in der Molmasse unterschiedlichen Polyamiden aufgebaut ist. Dabei werden Blends aus 1-75 Gew.-% eines Polyamids mit einem zahlenmittleren Molekulargewicht von 500 bis 15.000 g/mol und 99 bis 25 Gew.-% eines Polyamids mit einem zahlenmittleren Molekulargewicht von 15.000-30.000 g/mol hergestellt. Diese Polyamidformmasse sollte die Spritzgussverarbeitung beim Zusatz eines Füllstoffs oder Verstärkungsmittels verbessern. Als Beispiele für solche Polyamide sind PA 6, PA 66, PA 610 und PA 12 genannt.

In der US 5,112,908 (Du Pont) wird eine zähe, gut fließende niedermolekulare Polyamid-Formulierung mit Schlagzähmodifikatoren beschrieben. Diese Formulierung wird hergestellt durch Blenden von handelsüblichem Polyamid mit Schlagzähmodifikatoren, und sodann wird der Blend gemischt mit sehr niedermolekularen Polyamiden, welche die Möglichkeit haben, durch Transamidierung mit dem handelsüblichen Polyamid zu reagieren. Die Zusammensetzung dieses Blends besteht aus 60 bis 90 Gew.-% einer Polyamidmatrix, wobei mindestens 50 Gew.-% dieser Matrix ein zahlenmittleres Molekulargewicht von zwischen 3.000 g/mol und 8.000 g/mol besitzen, und 10 bis 40 Gew.-% eines organischen polymeren Schlagzähmodifikators.

In der EP 0 957 131 B1 (EMS-Chemie AG) werden Polyamidformmassen und ein Verfahren zu deren Herstellung mit stark verbesserter Verarbeitbarkeit, Fließwegen und Oberflächenqualität, ohne Verlust von Festigkeit oder Wärmestabilität beschrieben. In dieser Patentanmeldung werden sogenannte Präpolymere, die eine relative Lösungsviskosität (RV) von 1,01 bis 1,30, gemessen 0,5 %-ig in m-Kresol, in Mengen von 0,1 bis 20 Gew.-% zugegeben. Den Einfluss des Präpolymeren sieht man dabei sofort im Melt Volume Index (MVI) bzw. in der Melt Volume Rate (MVR) nach neuerer Bezeichnung. So hat z.B. eine PA12 Formmasse mit 2 % eines PA12 Präpolymeren (RV 1,10) einen MVI (bei 290 °C/ 5 kg, gemessen nach EN ISO 1133) von 420 ccm/10min. Das entsprechende PA12 hat unter gleichen Bedingungen hingegen nur einen MVI von 173 ccm/10min.

US 2004/0030023 (EMS-Chemie AG) beschreibt ebenfalls Polyamidformmassen unter Einsatz von Präpolymeren, die eine relative Lösungsviskosität von 1,01 bis 1,30 besitzen. Ziel ist es, insbesondere bei Verwendung von Füllstoffen, wie Glasfasern, eine verbesserte Fließfähigkeit und eine glänzende Oberfläche zu erhalten.

Aus der EP 1 029 896 A1 ist ein Polymerblend bekannt, der neben einem Polyamid, das durch einen Schmelzpunkt von größer 200 °C charakterisiert ist, ein aliphatisches Copolyamid mit einem Schmelzpunkt von < 100 °C beinhaltet.

Die US 6,211,266 B1 betrifft eine thermoplastische Harz-Zusammensetzung, die als Bestandteile umfasst:

A) 10 bis 97,9 Gew.-% eines teilkristallinen Polyamids,
B) 0,1 bis 50 Gew.-% eines Copolyamids, das aus 60 bis 90 Mol-% aus s-Caprolactam und 10 bis 40 Mol-% aus aliphatischen Dicarbonsäuren und aliphatischen Diaminen aufgebaut ist,
C) 1 bis 40 Gew.-% eines Copolymers, das auf Styrol oder Nitril basiert, sowie
D) 1 bis 50 Gew.-% eines faserförmigen Füllstoffes.

Die US 5,446,109 betrifft ein Verfahren zur Herstellung eines Polyamid/aliphatischen Polyesterblockpolymers, bei dem ein Polyamid in der Schmelze mit zumindest einem aliphatischen Ester und ε-Caprolacton sowie einer aromatischen Monohydroxy-Verbindung umgesetzt wird.

Aus der DE 42 35 505 A1 ist eine dauerhafte antistatische thermoplastische Harz-Zusammensetzung bekannt, die auf Polyesteramidpolymeren, Pfropfpolymeren, Vinyl-Copolymeren sowie modifizierten Styrolharzen basiert.

Ferner beschreibt die EP 0 592 941 A2 eine Polyamid-Zusammensetzung, die 70 bis 95 Gew.-% eines aliphatischen Polyamids, 5 bis 30 Gew.-% eines phenolischen Harzes und 0 bis 20 Gew.-% eines semi-aromatischen amorphen Polyamids umfasst.

Die EP 0 555 197 A2 betrifft ein antistatisches Mittel für thermoplastische Polymere sowie entsprechend antistatisch modifizierte Polymere.

Die US 5,369,171 betrifft eine Polymermischung, die eine Mikrophase aus schmelzpolymerisierten Materialien in einem thermoplastischen Polymer umfasst.

Aus der EP 0 494 449 A2 sind farbstabilisierte Polyamidformmassen, die auf phenolhaltigen Polyamidformmassen mit Zusätzen ausgewählter Salze von Sauerstoffsäuren des Phosphors, welche verbesserte Farbe bzw. Farbstabilität nach thermischer Belastung aufweisen, bekannt.

Die beschriebenen Formulierungen zeichnen sich allesamt dadurch aus, dass sie Materialien liefern, die bei der Spritzgussverarbeitung sehr gute Oberflächen besitzen. Gute Oberflächen im Spritzguss erzielt man mit guten Fließeigenschaften und großen Fließlängen, die in der Regel bei Materialien mit niedriger Schmelzeviskosität bzw. niedriger Schmelzefestigkeit gegeben sind. Weiterhin enthielten diese Formulierungen Füllstoffe und/oder Glasfasern.

In der WO 03/000772 A2 (BASF) werden multimodale Polyamide, Polyester und Polyesteramide beschrieben. Dabei handelt es sich zwingend um eine thermoplastische Polymermischung, die aus mindestens zwei Polymeren mit unterschiedlichen zahlenmittleren Polymerisationsgraden ($P_n$) besteht, die nach einer Lagerung der Polymermischung am Schmelzpunkt der Polymermischung über 5 Minuten in der Grössenausschluss- bzw. der Gelpermeationschromatographie (SEC bzw. GPC) mindestens 2 Maxima aufweist, dabei ändert sich die Lage der Maxima während der Lagerung nicht. Verwendung soll diese Polymermischung für die Herstellung von Fasern finden, hierbei wurden zu hohe Schmelzeviskositäten bzw. Schmelzefestigkeiten als unvorteilhaft angesehen.

In der EP 0 355 547 A1 (BASF) werden Polyamidformmassen mit hoher Wärmeformbeständigkeit für die Herstellung von Blasformteilen bestehend im wesentlichen aus zwei verschiedenen Polyamiden mit hoher für das Blasformen geeigneter Schmelzeviskositfät beschrieben. Diese Polyamidformmasse besteht aus zwei verschiedenen Polyamiden, die in der Schmelze miteinander homogen mischbar sind und die eine Differenz der Schmelzetemperaturen von 10 bis 50 °C aufweisen, wobei der Anteil des Polyamids (a) mit der niedrigen Schmelztemperatur 5 bis 40 Gew.-% und der Anteil des Polyamids (b) mit der höheren Schmelztemperatur 60 bis 95 Gew.-% beträgt. Die höhere Wärmeformbeständigkeit wird in dieser Anmeldung durch die unterschiedlichen Schmelzpunkte der verwendeten Polyamiden erreicht.

US 5,369,171 (Rehau AG + Co.) beschreibt die in-situ Polymerisation eines reaktiven Lactams in der Schmelze eines zweiten Thermoplasten, wobei dieser aus Polyamid sein kann. Ziel ist die intrinsische Verstärkung des Materials und es werden keine Angaben zu den Schmelzeviskositäten gemacht.

Der prinzipielle Einfluss der relativen Viskosität bzw. des Molekulargewichts sowie der Molekulargewichtsverteilung von Polymeren ist in der Literatur beschrieben, beispielsweise in F. N. Cogswell, "Polymer melt rheology", John Wiley & Sons, New York, 1981.

Die im Stand der Technik aufgeführten Patentdokumente verwenden meist das zahlenmittlere Molekulargewicht ($M_n$), da diese sich sehr leicht aus der Endgruppenkonzentration über die allgemein bekannte Beziehung (s. a. M. I. Kohan [Hrsg.], Nylon plastics handbook, Carl Hanser Verlag, 1995, S. 34 bis 48):

$$M_n = \frac{2 \cdot 10^6}{[COOH] + [NH_2] + [R]}$$

berechnen lässt. Dabei steht $M_n$ für das zahlenmittlere Molekulargewicht in g/mol, [COOH] bzw. [NH$_2$] für die Konzentration der Säure- bzw. Aminoendgruppen in mmol/kg und [R] für die Konzentration eines Reglers in mmol/kg. Werden bei der Polymerisation keine Regler eingesetzt, vereinfacht sich die Formel wie folgt:

$$M_n = \frac{2 \cdot 10^6}{[COOH] + [NH_2]}$$

Da bei manchen Herstellungsarten keine titrierbaren Endgruppen vorhanden sind, kann in solchen Fällen das Molekulargewicht über die Grössenausschluss- bzw. die Gelpermeationschromatographie (SEC bzw. GPC) oder Lichtstreuung bestimmt werden. Bei der SEC erhält man neben dem zahlenmittleren Molekulargewicht auch die Molekulargewichtsverteilung des untersuchten Polymeren. Die Molekulargewichtsverteilung für Polyamide hängt nach der Carothers Gleichung (s. a. M. I. Kohan [Hrsg.], Nylon plastics handbook, Carl Hanser Verlag, 1995, S. 34-48):

$$\frac{M_w}{M_n} = \frac{P_w}{P_n} = 1 + p$$

da : $P_n = \frac{1}{(1-p)}$ bzw. $P_w = \frac{(1+p)}{(1-p)}$ vom Umsatz p ab. In der Gleichung stehen $M_w$ und $M_n$ für das gewichtsmittlere bzw. zahlenmittlere Molekulargewicht, $P_w$ und $P_n$ für die gewichtsmittleren bzw. zahlenmittleren Polymerisationsgrade und p ist das Ausmass (Umsatz) der Reaktion zwischen 0 und 1 (1 = 100 %). Aus der obigen Gleichung ist deutlich ersichtlich, dass für die hydrolytische Polykondensation die Polydispersität $M_w/M_n$ gegen zwei strebt, wenn der Umsatz gegen 100 % geht. Somit gibt es hierfür auch eine Möglichkeit aus dem gewichtsmittleren Molekulargewicht, welches bei der Lichtstreuung ermittelt wird, das zahlenmittlere Molekulargewicht zu berechnen, das ungefähr die Hälfte davon beträgt.

Durch die relativ niedrigen Kettenlängen zeigt das Polyamid eine relativ geringe Strukturviskosität, d.h. die Abhängigkeit der Schmelzeviskosität von der Schergeschwindigkeit ist gering. Insbesondere für die Extrusion von Rohren mit grossem Durchmesser ist eine hohe Schmelzefesügkeit bei niedriger Schergeschwindigkeit erforderlich. Die dafür erforderlichen hohen Schmelzeviskositäten erzeugen jedoch hohe Drücke in der Düse und erfordern hohe Drehmomente bei der Extrusion.

Aufgabe der vorliegenden Erfindung ist es daher, eine Formulierung auf Basis von thermoplastischen Polymeren zu entwickeln, die eine hohe Schmelzefestigkeit aufweist und somit geeignet ist, um Rohre mit einem grossen Durchmesser, d. h. grösser als 20 mm Aussendurchmesser herzustellen.

Ein Mass für die Schmelzefestigkeit ist die Tendenz des extrudierten Materials unter dem Einfluss des Eigengewichts nach unten zu fliessen, das sogenannte Sagging. So kommt es zu unterschiedlichen Wandstärke des waagrecht extrudierten Rohrs zwischen oben und unten. Je höher die Schmelzefestigkeit, desto eher nähert sich der Quotient $f_{SMF}$ aus grösster Wandstärke $d_{max.}$ zu kleinster Wandstärke $d_{min.}$ dem Wert 1.

$$f_{SMF} = d_{max.}/d_{min.}$$

Dem Sagging kann man begrenzt entgegenwirken, indem man der Wanddickenänderung durch gezielte exzentrische Einstellung von Düse und Dorn entgegenwirkt. Die Wanddicke vorne und hinten überschreitet mit grösser werdenden Rohrdurchmessern jedoch die geforderte Wanddickentoleranz. Zudem kann es unter Umständen zur Faltenbildung an der Rohrinnenoberfläche durch die herunter laufende Schmelze kommen. Ist dies der Fall, muss mit einer Innenkalibrierung gearbeitet werden. Diese ist sehr aufwendig und wird nur im Notfall angewendet, da die Wirtschaftlichkeit sehr stark beeinträchtigt wird.

Deshalb ist der Fachmann bestrebt, möglichst Material mit hoher Schmelzefestigkeit einzusetzen. Hierbei sollte die Stromaufnahme bei der Extrusion begrenzt sein, so dass das Material auf konventionellen Extrusionsanlagen zur Extrusion von Rohren großer Durchmesser, die dem Fachmann bekannt sind, verarbeitbar ist.

Ziel einer Materialentwicklung muss es aus diesem Grund sein, ein optimales und ausgewogenes Verhältnis dieser Verarbeitungsparameter zu erhalten.

Weiterhin sollte die Formulierung eine gute Schlagzähigkeit vor allem bei niedrigen Temperaturen aufweisen.

Diese Aufgabe wird gelöst durch die Formmassen gemäß Anspruch 1.

Insbesondere überraschend zeigte sich, dass durch Zumischen niederviskoser Polyamide zu hochviskosen Polyamiden ein Optimum zwischen Formstabilität des extrudierten Rohrs und Stromaufnahme erreicht wird. Dabei bleibt die Schlagzähigkeit überraschenderweise erhalten.

In den Unteransprüchen sind vorteilhafte Ausführungsformen der Erfindung enthalten.

Die erfindungsgemäßen hochviskosen Formmassen zeigen bei guter Verarbeitbarkeit eine hohe Schmelzefestigkeit, definiert durch eine Schmelzefestigkeit nach der in dieser Anmeldung offenbarten Norm von über 18 Sekunden (bei 230°C) und durch geringe Wandstärkenunterschiede von extrudierten 110x10 mm Rohren, definiert durch $f_{SMF}$ kleiner 1,1, bzw. bevorzugt durch $f_{SMF}$ kleiner 1,05.

Die Erfindung betrifft daher hochviskose Formmassen auf Basis von Polyamiden, enthaltend folgende Komponenten:

(a) 70 bis 100 Gew.-% einer Mischung bestehend aus 95 bis 10 Gewichtsteilen eines Polyamids PA11 oder PA12 mit einem zahlenmittleren Molekulargewicht ($M_n$) > 30.000 g/mol und aus 5 bis 90 Gewichtsteilen eines Polyamids PA11 oder PA12 mit einem zahlenmittleren Molekulargewicht ($M_n$) von 15.000 bis 30.000 g/mol, wobei die Summe der Gewichtsteile 100 ergibt,

und gegebenenfalls,

(b) 0 bis 25 Gew.-%, bevorzugt 0 bis 15 Gew.-%, mindestens eines polymeren Schlagzähmodifikators,
(c) 0 bis 5 Gew.-% weitere Additive, wobei die Additive ausgewählt sind aus der Gruppe der UV- und Hitzestabilisatoren, der Antioxidantien, der Viskositätserhöhungsmittel, der Pigmente und der Farbstoffe, der Nukleierungsmittel, der Kristallisationsbeschleuniger, der Kristallisationsverzögerer, der Fließhilfsmittel, der Gleitmittel, der Entformungsmittel, der Flammschutzmittel sowie der Mittel, die die elektrische Leitfähigkeit verbessern, insbesondere sogenannte Kohlenstoff-Nanotubes,

wobei die Summe der Komponenten aus (a), (b) und (c) 100 Gew.-% ergibt.

Die erfindungsgemäßen Formmassen weisen dabei eine sehr gute Schlagzähigkeit bei niedrigen Temperaturen, insbesondere eine Schlagzähigkeit (ISO 179) von mindestens 9 kJ/m$^2$, gemessen bei Raumtemperatur bzw. von mindestens 7 kJ/m$^2$, gemessen bei -30°C, und hohe Schmelzefestigkeit, insbesondere von über 18 Sekunden bei 230 °C und einer geringen Tendenz zu Sagging, definiert durch $f_{SMF}$ kleiner 1,1, bevorzugt kleiner 1,05, auf.

Erfindungsgemäß besonders bevorzugt ist eine Formulierung aus hochviskosen Formmassen, wobei die Mischung des Polyamids 11 oder 12 mit einem Mischungsverhältnis von 90 bis 10 Gew.-% eines Polyamids mit einem mittleren Molekulargewicht ($M_n$) > 30.000 g/mol mit 10 bis 90 Gew.-% eines Polyamids 11 oder 12 mit einem mittleren Molekulargewicht ($M_n$) von 15.000 bis 30.000 g/mol hergestellt ist.

Ganz besonders bevorzugt ist erfindungsgemäß eine hochviskose Polyamidformmasse, in der die Mischung des Polyamids 11 oder 12 mit einem Mischungsverhältnis von 90 bis 50 Gew.-% eines hochviskosen Polyamids ($M_n$ > 30.000 g/mol) mit 10 bis 50 Gew.-% eines normalviskosen Polyamids 11 oder 12 ($M_n$ 15.000 bis 30.000 g/mol) hergestellt wird.

Desweiteren insbesondere bevorzugt wird eine hochviskose Polyamidformmasse, deren normalviskose Polyamidkomponente aus PA11 oder PA12 ein Molekulargewicht ($M_n$) von 15.000 bis 25.000 g/mol besitzt.

Die Bestimmung des mittleren Molekulargewichts ($M_n$) erfolgt über die Gesamtendgruppenzahl EG gemäß der Formel

$$M_n = \frac{2 \cdot 10^6}{EG},$$

wobei die Summe der Endgruppen (EG) in mmol/kg angegeben wird. Diese Methode ist die Standardmethode für die Molekulargewichtsangaben ($M_n$) in der vorliegenden Anmeldung.

In einer bevorzugten Ausführungsform der Erfindung weist die eingesetzte hochviskose Komponente aus Polyamiden 11 oder 12 insbesondere einen Endgruppengehalt von unter 66 mmol/kg auf.

Die Endgruppenzahl von unter 66 mmol/kg entspricht dem oben erwähnten $M_n$-Wert von > 30.000 g/mol. Diese zwei Zahlenwerte sind über die weiter oben erwähnte allgemein bekannte Umrechnungsformel

$$M_n = \frac{2 \cdot 10^6}{[COOH] + [NH_2] + [R]}$$

miteinander korreliert, wobei $[COOH] + [NH_2] + [R]$ = EG ist.

Desweiteren weist in einer besonders bevorzugten Ausführungsform der Erfindung die gesamte Formmasse insbesondere einen Endgruppengehalt von unter 66 mmol/kg auf.

In einer weiteren besonderen Ausführung wird der Mischung zweier Polyamide (jeweils PA11 oder 12) verschiedenen Molekulargewichts nach (a) zusätzlich ein aufbauendes, d.h. kettenverlängerndes Additiv zugesetzt, wie Carbonyl-bis-caprolactam (CBC), N-N'-Terephthaloyl-bis-caprolactam, Bisoxazoline, Diisocyanate, verkappte Diisocyanate, Carbodiimide, epoxyfunktionalisierte Oligo- oder Polymere oder auf Carbonateinheiten basierende Additive. In diesem Fall wird das erfindungsgemäße hochviskose Polyamid bei der Compoundierung bzw. Extrusion in-situ erzeugt, wobei auch durch die Wahl geeigneter Endgruppen der beiden Polyamide unterschiedlicher Viskosität die Reaktivität des Additivs gesteuert werden kann, beispielsweise durch die Kombination eines aminterminierten mit einem carboxylterminierten Polyamid.

Die eingesetzten Polyamide können Polymerisate aus 11-Aminoundecansäure, 12-Aminododecansäure oder ω-Laurinlactam sein.

Die erfindungsgemäßen Polyamid-Formassen können aber auch Polyamid-Blockcopolymere enthalten, die Polyester-, Polyether-, Polysiloxan-, Polycarbonat-, Poly-(meth)acrylat- oder Polyolefinsegmente als weitere Bausteine neben einem Anteil von mindestens 20 Gew.-% Polyamid-Bausteinen enthalten. Vertreter dieser Polymerklasse sind z.B. Polyetheramide, Polyetheresteramide und Polyesteramide, wobei PA12 als Polyamidsegment besonders bevorzugt ist.

Als weitere Zusatzstoffe sind den erfindungsgemäßen thermoplastischen Polyamid-Formmassen Schlagzähmodifikatoren (b) in Mengen von 0 bis 15 Gew.-% zugesetzt. Diese Polymere, die mit dem Polyamid kombiniert werden können, sind z.B. Copolymere auf Polyolefinbasis von tiefer

Glasumwandlungstemperatur, die mit polaren Gruppen, wie z.B. Carboxylgruppen oder Anhydridresten versehen sind, z.B. Polyethylen (LDPE, LLDPE), Ethylen/Propylen-, Ethylen/1-Buten-Copolymere, Ethylen-Propylen-Dien-Kautschuke (EPDM) und andere Copolymere mit (i) einem Monomeren von Ethylen oder alpha-Olefin oder gegebenenfalls einem Diolefin und (ii) mindestens einem Comonomeren, das unter Vinylestern gesättigter Carbonsäuren, ungesättigten Mono- und Dicarbonsäuren, deren Estern und Salzen und Dicarbonsäureanhydriden ausgewählt ist, den maleinsäuremodifizierten Blockcopolymeren SBS, SIS oder SEBS oder Acrylatkautschuke, Ethylen-Butylacrylat-Copolymere (EBA) oder Ethylen-VinylacetatCopolymere (EVA).

Weiterhin enthalten die verwendeten (Co)Polyamide bzw. die Formmassen übliche Zusatzstoffe (c) wie UV- und Hitzestabilisatoren, Kristallisations-Beschleuniger, -Verzögerer, Fliesshilfsmittel, Gleitmittel, Entformungsmittel, Flammschutzmittel, Fremdpolymer, Haftvermittler, Stabilisatoren gegen Bewitterung, Mineralien, Verarbeitungshilfsmittel, Oxidationsschutzmittel, Entformungsmittel, Weichmacher, Pigmente, Farb- und Markierungsstoffe, Füllstoffe wie Russ oder Graphit, Kohlenstoff-Nanofibrillen oder auch Nanoteilchen in Plättchenform, Nukleierungsmittel sowie Mittel, die die elektrische Leitfähigkeit verbessern können. Insbesondere können hier auch sogenannte Kohlenstoff-Nanotubes als Mittel zur Erhöhung der Leitfähigkeit zugegeben werden (vgl. A. Rich, P. Collins, J. Hagerstrom, Hyperion Catalysis International, Paper No. 2002-01-1037 "Nanotubes for Conductive Plastics Move to the Next Performance Level", Society of Automotive Engineers, Inc., 2002).

Bei der Hitze- und UV-Stabilisierung kann unter anderem auf die Methoden und Additive zurückgegriffen werden, wie sie in der DE 195 37 614 C3 oder der EP 0 818 491 B beschrieben sind.

Oxidationsverzögerer und Wärmestabilisatoren, die den thermoplastischen Massen gemäss der Erfindung zugesetzt werden können, sind z.B. Halogenide von Metallen der Gruppe I des Periodensystems, z.B. Natrium, Kalium, Lithium-Halogenide, ggf. in Verbindung mit Kupfer-(I)-Halogeniden, z.B. Chloriden Bromiden oder Iodiden. Die Halogenide, insbesondere des Kupfers, können auch noch elektronenereiche $\pi$-Liganden enthalten. Als Beispiel für derartige Kupferkomplexe seien Cu-Halogenid-Komplexe mit z.B. Triphenylphosphin genannt. Ferner sind sterisch gehinderte Phenole und/oder Thioether, bevorzugt sterisch gehinderten Phenole, gegebenenfalls in Verbindung mit phosphorhaltigen Säuren bzw. deren Salze, z.B. Verbindungen aus der Gruppe der Phosphite oder der Phosphonite, und Mischungen dieser Verbindungen, im allgemeinen in Konzentrationen bis zu 1 Gew.-%, bezogen auf das Gewicht der Mischung einsetzbar.

Beispiele für UV- Stabilisatoren sind ausgewählt aus der Gruppe der HALS (hindered amine light stabilizers), verschiedener substituierter Benzotriazole, Oxanilide und/oder Benzophenone, die im allgemeinen in Mengen bis zu 2 Gew.-% eingesetzt werden.

Die Pigmente und Farbstoffe zur Einfärbung von Thermoplasten sind allgemein bekannt, siehe z.B. R. Gächter und H. Müller, Taschenbuch der Kunststoffadditive, Carl Hanser Verlag, 1983, S. 494-510, und sind allgemein in Mengen von 0 bis 4 Gew.-%, bevorzugt von 0,5 bis 3,5 Gew.-% und besonders bevorzugt von 0,5 bis 2 Gew.-%, bezogen auf das Gesamtgewicht der Zusammensetzung, enthalten. Als erste bevorzugte Gruppe von Pigmenten sind Weisspigmente zu nennen wie Zinkoxid, Zinksulfid, Bleiweiss (2 $PbCO_3$ $Pb(OH)_2$), Lithopone, Antimonweiss und Titandioxid. Von den beiden gebräuchlichsten Kristallmodifikationen (Rutil- und Anatas-Typ) des Titandioxid wird insbesondere die Rutilform zur Weissfärbung der erfindungsgemässen thermoplastischen Formmassen verwendet.

Schwarze Farbpigmente, die erfindungsgemäss eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Russ, der meist in der Form von Furnace- oder Gasruss eingesetzt wird (siehe hierzu G. Benzing, Pigmente für Anstrichmittel, Expert-Verlag (1998), S.78 ff.).

Selbstverständlich können zur Einstellung bestimmter Farbtöne anorganische Buntpigmente wie Chromoxidgrün oder organische Buntpigmente wie Azopigmente und Phthalocyanine erfindungsgemäss eingesetzt werden. Derartige Pigmente sind allgemein im Handel erhältlich. Weiterhin kann es von Vorteil sein, die genannten Pigmente bzw. Farbstoffe in Mischungen einzusetzen, z.B. Russ mit Kupferphthalocyaninen, da allgemein die Farbdispergierung im Thermoplasten erleichtert wird.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester, und -amide sowie Ester des Pentaerythrits mit langkettigen Fettsäuren. Es können auch Salze des Calciums, Zinks oder Aluminiums der Stearinsäure, eingesetzt werden.

Als mögliche weitere Klasse von Additiven werden die bereits oben beschriebenen kettenverlängernden Additive verstanden.

In anderen bevorzugten Ausführungsformen der Erfindung enthalten die Formmassen weiterhin nanoskalige Füllstoffe. In einer besonderen Ausführungsform der Erfindung sind die nanoskaligen Füllstoffe entweder Siliziumdioxid oder Siliziumdioxid-Hydrate. In der PolyamidFormmasse liegen gewisse nanoskaligen Füllstoffe in einer Ausführungsfbnn als ein gleichmässig dispergiertes, schichtförmiges Material vor. Auch können Viskositätserhöhungen nach EP 1 394 197 A1 mit entsprechend modifizierten Schichtsilikaten, sogenannten Nanofüllstoffen, erfolgen.

Als nanoskalige Füllstoffe eignen sich solche Stoffe, welche in jeder beliebigen Stufe der Herstellung zugegeben werden können und dabei im Nanometerbereich fein verteilbar sind. Die erfindungsgemässen nanoskaligen Füllstoffe (c) können oberflächenbehandelt sein. Es können aber auch unbehandelte Füllstoffe (c) oder Mischungen aus unbehandelten und behandelten Füllstoffen (c) eingesetzt werden. Erfindungsgemäss bevorzugte Mineralien, die bereits eine Schichtstruktur aufweisen, sind Schichtsilikate, Doppelhydroxide, wie Hydrotalcit oder auch Graphit. Ebenso eignen sich erfindungsgemäss Nanofüllstoffe auf Basis von Siliconen, Silica oder Silsesquioxanen.

Unter Schichtsilikaten im erfindungsgemässen Sinne werden 1:1 sowie 2:1 Schichtsilikate verstanden. Die Schichtdicken der Schichtsilikate betragen vor der Quellung üblicherweise 0,5 bis 2,0 nm, ganz besonders bevorzugt 0,8 bis 1,5 nm (Abstand der Schichtoberkante zur folgenden Schichtoberkante). Hierbei ist es möglich, den Schichtabstand weiter zu vergrössern, indem man das Schichtsilikat beispielsweise mit Ammoniumsalzen von primären Aminen mit mindestens 6 Kohlenstoffatomen wie Hexanamin, Decanamin, Dodecanamin, Stearylamine, hydrierte Fettsäureamine oder auch quaternäre Ammoniumverbindungen sowie Ammoniumsalze von $\alpha$-,$\omega$-Aminosäuren mit mindestens 6 Kohlenstoffatomen vorbehandelt (Quellung). Je nach Art der Verweilzeit und der Art des gewählten Monomeren vergrössert sich der Schichtabstand zusätzlich um 1 bis 15 nm, vorzugsweise um 1 bis 5 nm. Die Länge der Plättchen beträgt üblicherweise bis zu 800 nm, vorzugsweise bis zu 400 nm. Etwa vorhandene oder sich aufbauende Präpolymere tragen in der Regel ebenfalls zur Quellung der Schichtsilikate bei.

Erfindungsgemäss werden aber keine weiteren anorganischen faserförmigen Verstärkungsstoffe mit Dimensionen > 500 nm eingesetzt. Insbesondere werden keine Glasfasern verwendet.

Den erfindungsgemässen Formmassen können weiterhin Additive zur Vernetzung beigegeben werden, beispielsweise zur Strahlenvernetzung TAIC (Triallylisocyanurat), beschrieben beispielsweise in US 2005/0005989 (Roloff, D.) oder andere dem Fachmann bekannte Additive.

Den zuvor beschriebenen Formmassen können für bestimmte Zwecke auch andere übliche Polymere wie Polyester, Polyolefine, Polycarbonate, Polyethylen, Polyvinylalkohole, Polyvinylactetate, AN- und ABS-Polymerisate, funktionalisierte Copolyolefine und Ionomere zugesetzt sein.

Die erfindungsgemässen Formmassen können bevorzugt durch Extrusion und Coextrusion, zu den entsprechenden Gegenständen umgearbeitet, d.h. dafür verwendet werden. Weitere Verarbeitungsverfahren sind Extrusionsblasformen, 3D-Blasformen, Coextrusionsblasformen, Coextrusions-3D-Blasformen, sequentielle Coextrusion und sequentielles Blasformen. Aber auch Spritzgiessen, Spritzgiessschweissen, Tiefziehen, Coextrusions-Saugblasformen, Herstellung von Hart-Weich-Verbunden, GIT (Gasinnendrucktechnik) und WIT (Wasserinnendrucktechnik) und vergleichbaren Verarbeitungsverfahren sind möglich.

Die erfindungsgemässen Formmassen ermöglichen insbesondere eine Extrusion von ein- oder mehrschichtigen Rohren mit grossem Durchmesser, d. h. von grösser 20 mm Aussendurchmesser, insbesondere von grösser 30 mm Aussendurchmesser unter Verwendung von dem Fachmann bekannten Extrusionsanlagen. Die extrudierten Rohre weisen dabei eine hohe Formgleichmässigkeit auf, d.h. die Rohre zeigen nicht durch "Sagging" erzeugte Rohrwanddickenunterschiede. Die erfindungsgemäßen Formmassen zeichnen sich daher durch eine sehr geringe Tendenz zum Sagging aus, definiert durch einen Faktor $f_{SMF}$ = (dickste Wanddicke)/(dünnste Wanddicke) von kleiner 1,1, bevorzugt von kleiner 1,05.

Die erfindungsgemäßen Formmassen lassen sich also zu Rohren weiterverarbeiten, deren Querschnitt bei horizontaler Extrusion mit mittig zentriertem Dornein Verhältnis aus dickster zu dünnster Wandstärke von < 1,1 besitzen.

Insbesondere lassen sich die Formmassen zu Rohren verarbeiten, deren Querschnitt bei horizontaler Extrusion mit mittig zentriertem Dorn ein Verhältnis aus dickster zu dünnster Wandstärke von < 1,05 besitzen.

Bei der Rohrproduktion in der Praxis kann der Dorn leicht exzentrisch nach unten verschoben werden, wodurch sich aus den erfindungsgemässen Formmassen sogar Rohre mit einem Verhältnis aus dickster zu dünnster Wandstärke von nahezu 1,00 herstellen lassen.

Ein kritischer Wert für Rohrleitungssysteme für gasförmige Medien ist der Widerstand gegen die schnelle Rissfortpflanzung bei äusserer Schlageinwirkung mit Innendruck, wie er z.B. durch das ungewollte Auftreffen einer Baggerschaufel bei Reparaturarbeiten entstehen kann. Diese Eigenschaft wird als sogenannter Widerstand gegen Rapid Crack Propagation, RCP bezeichnet. Die Prüfung wird unter anderem in der Norm ISO/CD 13477 bzw. ISO/CD 13478 beschrieben. Als Ergebnis erhält man den maximal zulässigen Betriebsdruck, MOP, der je nach Anwender variieren kann und von verschiedenen Sicherheitsfaktoren abhängig ist. Der Widerstand gegenüber Schlageinwirkung ist ebenso wie die Schmelzefestigkeit sehr stark von der Moleküllänge abhängig, da lange Molekülketten die Verschlaufung der Molekülketten fördern und so die Schlagzähigkeit erhöhen. Wie oben ausgeführt, ist dies nur bis zu einem bestimmten Mass möglich und wird durch die Extrudereigenschaften begrenzt.

Die zweite Einflussgrösse für den maximal zulässigen Betriebsdruck, MOP ist die Zeitstandfestigkeit. Diese wird, wie unter anderem in der Norm ISO 9080 beschrieben, geprüft. Als Resultat dieser Prüfung erhält man eine Vergleichsspannung, LTHS nach einer Betriebsdauer von z.B. 50 Jahren, wobei für die Berechnung des MOP's die untere Vertrauensgrenze, LCL ausschlaggebend ist. Dieser Wert wird auf die nächst tiefere Normzahl gerundet und ergibt dann die minimal geforderte Festigkeit, MRS. Mit den anwenderspezifischen Sicherheitsfaktoren errechnet sich daraus der MOP. Die Vergleichsspannung ist wiederum stark abhängig von der Moleküllänge und mit steigender Molekularmasse steigt die Vergleichsspannung ebenfalls.

Mit erfindungsgemässen Formmassen lässt sich bei ausreichenden Verarbeitungsbedingungen der maximal zulässige Betriebsdruck MOP mindestens verdoppeln.

Ein- oder mehrschichtige Hohlkörper aus thermoplastischen Polymeren und damit auch Polyamid-Hohlkörper lassen sich prinzipiell nach dem Extrusions-Blasverfahren bzw. den diesem Verfahren zugeordneten Sonderverfahren herstellen. Die Palette an hergestellten Produkten umfasst dabei neben den gängigen Hohlkörpern im Verpackungsbereich wie Flaschen, Kanister, Fässer etc., eine Vielzahl technischer Formteile wie z.B. Rohre und Rohrleitungssysteme, welche für Fluide wie z.B. gasförmige Medien eingesetzt werden können. In verstärktem Masse lassen sich mit den neueren 3D-Verfahren (3D-Schlauchmanipulation, 3D-Saug-Blasverfahren) jede erdenkliche Form von Rohren und Schläuchen für druckführende Medien und drucklose Medien herstellen.

Üblicherweise können hochmolekulare Polyamide für das Extrusions-Blasverfahren verwendet werden, deren Viskositätszahl nach DIN 53727 (Schwefelsäure) mindestens 150, insbesondere mindestens 200 beträgt. Viskositätszahlen von mindestens 150 bedeuten auch gleichzeitig hohe Schmelzeviskositäten. Im gleicher Weise wie bei der Extrusion von Profilen und Rohren muss der extrudierte Strang eine hohe Schmelzefestigkeit besitzen.

## Beispiele

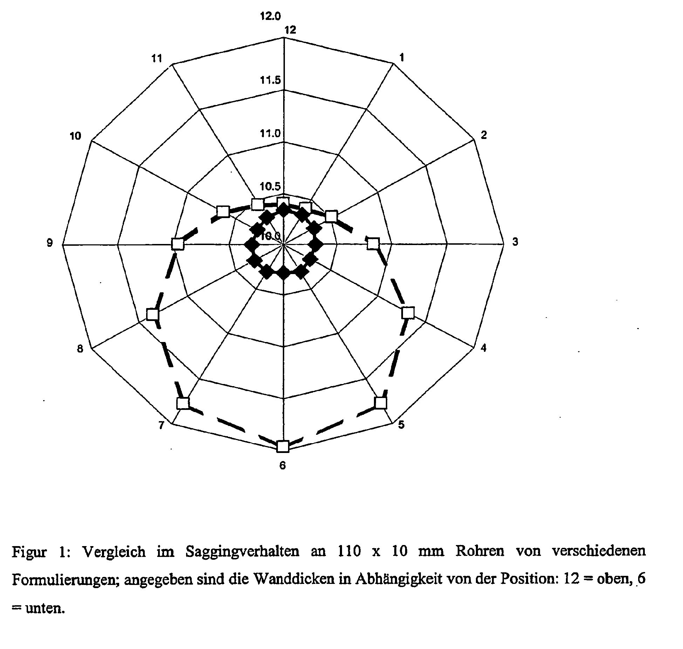

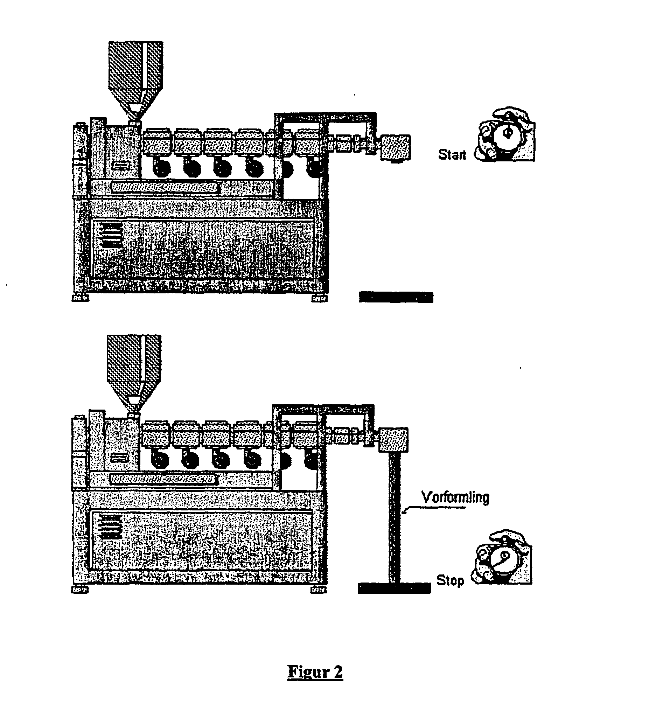

Die Erfindung wird nun anhand der folgenden Beispiele sowie der beigefügten Figuren 1 und 2 näher erläutert, ohne jedoch die Erfindung darauf zu beschränken.

Fig. 1 ist eine graphische Auswertung des Saggingverhaltens an 110 x 10 mm Rohren von verschiedenen Polyamid-Formulierungen; angegeben sind die Wanddicken in Abhängigkeit von der Position: 12 = oben, 6 = unten;

Fig. 2 zeigt die apparative Vorrichtung zur Bestimmung der erfindungsgemässen Schmelzefestigkeit, wobei zur Bestimmung der Schmelzefestigkeit ein Schlauch aus polymeren Formmassen kontinuierlich über einen Winkelkopf extrudiert wird und dann die Zeit gemessen wird, die der Schlauch benötigt, um den Abstand (z. B. 1 Meter) von der Düse bis zum Boden zurückzulegen (in Sek.). Bei der Messung der Schmelzefestigkeit wird mit einem konstanten Ausstoss und einem an den Polymertyp angepassten Temperaturprofil gefahren.

### Vorbemerkung

Die in den Beispielen verwendeten hochviskosen Polyamide mit einem $M_n$ > 30.000 g/mol können mit Hilfe der klassischen Polymerisation und/oder einer Festphasennachkondensation hergestellt werden. Diesbezüglich wird auf die CH 359 286 verwiesen. Andere, dem Fachmann bekannte Verfahren können aber ebenfalls benutzt werden, insbesondere der Aufbau mittels geeigneter Additive ist möglich (Bsp. 9).

Die Beispiele 1 bis 5, 7 bis 9 und Vergleichsversuch 1 wurden auf einem Doppelwellenextruder der Fa. Coperion Werner + Pfleiderer mit Durchmesser 25 mm (ZSK 25) und einem L/D Verhältnis von 49 hergestellt. Hierzu wurde die Gehäusetemperatur zwischen 250 °C bis 280 °C eingestellt, der Durchsatz lag zwischen 8 kg/h bis 10 kg/h, die Drehzahl betrug 180 U/min.

Das Beispiel 6 und der Vergleichsversuch 2 wurden auf einem Doppelwellenextruder der Fa. Coperion Werner + Pfleiderer mit Durchmesser 83 mm (ZSK 83) und einem L/D Verhältnis von 27 hergestellt. Hierzu wurde die Gehäusetemperatur zwischen 250 °C bis 280 °C eingestellt, der Durchsatz, mit einer Drehzahl von 200 U/min, lag bei 250 kg/h. Bezüglich der eingesetzten Formulierungen verweisen wir auf die in der Tabelle 1 angegebenen Polyamidmaterialien (Polyamid (PA) 1 bis PA 4).

Die eingesetzten Polyamidmaterialien PA 1 bis PA 4 weisen eine relative Lösungsviskosität (RV), gemessen 0,5%ig in m-Kresol bei 25°C sowie folgende mittlere Zahlenmittel der Molmasse, berechnet aus der Summe der Endgruppen nach oben beschriebener Formel, auf:

1) PA1: PA12 mit $M_n$ von 48800 g/mol, RV=2,65
2) PA2: PA12 mit $M_n$ von 30800 g/mol, RV=2,20
3) PA3: PA12 mit $M_n$ von 19400 g/mol, RV=1,66
4) PA4: PA12 mit $M_n$ von 19000 g/mol, RV=1,65

Die Bestimmung der Aminoendgruppen erfolgt durch Lösen des Polyamids in heissem m-Kresol/Isopropanol (2:1 vol./vol.) und anschliessender potentiometrischen Titration mit Perchlorsäure. Zur Bestimmung der Carboxylatendgruppen wird das Polyamid in heissem Benzylalkohol gelöst und mit Tetrabutylammoniumhydroxidlösung potentiometrisch titriert. Der Endgruppengehalt (EG) wird aus der Summe dieser beiden Teilergebnisse gebildet.

Die Vergleichsversuche verwenden Formulierungen einer Formmasse, die geeignet ist 8 x 1 mm Rohre (8 mm Außendurchmesser, 1 mm Wanddicke) herzustellen.

Tabelle 1:

|  | Vgl. 1 | Bsp. 1 | Bsp. 2 | Bsp. 3 | Bsp. 4 | Bsp. 5 |
|---|---|---|---|---|---|---|
| **Zusammensetzung [Gew.-%]** |  |  |  |  |  |  |
| PA1 |  | 49,5 | 74 | 89 | 89 | 74 |

(fortgesetzt)

| | Vgl. 1 | Bsp. 1 | Bsp. 2 | Bsp. 3 | Bsp. 4 | Bsp. 5 |
|---|---|---|---|---|---|---|
| **Zusammensetzung [Gew.-%]** | | | | | | |
| PA2 | 99 | 49,5 | 25 | 10 | | |
| PA3 | | | | | | |
| PA4 | | | | | 10 | 25 |
| Hitze-/UV-Stabilisator | 1 | 1 | 1 | 1 | 1 | 1 |
| **Eigenschaften** | | | | | | |
| EG [1] | 65 | 58 | 57 | 38 | 57 | 63 |
| MVR [2] | 24 | 17 | 12 | 6 | 13 | 12 |
| E-Modul [3] | 1590 | 1655 | 1565 | 1560 | 1565 | 1650 |
| RF [4] | 50 | 50 | 50 | 45 | 50 | 55 |
| RD [5] | 250 | 195 | 205 | 190 | 175 | 205 |
| KSZ 23°C [6] | 9 | 10 | 9 | 13 | 10 | 10 |
| KSZ-30°C [6] | 7 | 8 | 7 | 7 | 8 | 8 |
| SMF [7] | 19 | 31 | 36 | 40 | 39 | 29 |
| I [8] | 12,3 | 14,4 | 15,0 | 15,0 | 15,0 | 13,2 |
| SMF/I [9] | 1,6 | 2,2 | 2,4 | 2,6 | 2,6 | 2,2 |
| **Legende zu Tabelle 1:**<br>[1] EG = Summe der messbaren Endgruppen [mmol/kg].<br>[2] MVR = Melt Volumen Rate bei 275 °C und einer Belastung von 5 kg [ml/10min]<br>[3] E-Modul nach ISO527 [MPa]<br>[4] RF = Reissfestigkeit nach ISO527 [MPa]<br>[5] RD = Reissdehnung nach ISO527 [%]<br>[6] KSZ xx°C= Kerbschlagzähigkeit nach Charpy ISO179/2-1eA bei xx=23 bzw. xx=-30°C [kJ/m$^2$]<br>[7] SMF = EMS-Norm, Schmelzefestigkeit gemessen bei 230 °C Manteltemperatur [s]<br>[8] I = Stromaufnahme bei der Extrusion [A], siehe Definition "Schmehefestigkeit"<br>[9] SMF/I = Faktor Schmelzefestigkeit pro Stromaufnahme. | | | | | | |

Tabelle 2:

| | Vgl. 2 | Bsp. 6 | Bsp. 7 | Bsp. 8 | Bsp. 9 |
|---|---|---|---|---|---|
| **Zusammensetzung [Gew.-%]** | | | | | |
| PA1 | | 75 | 74 | 73,5 | |
| PA2 | 94 | | | | 72,5 |
| PA3 | | | 18 | | |
| PA4 | | 19 | | 18 | 18 |
| Aufbauendes Additiv [1] | | | | | 1 |
| Hitze-/UV-Stabilisator | 1 | 1 | 1 | 1 | 1 |
| Schlagzähmodifikator | 5 | 5 | 5 | 7,5 | 7,5 |
| Nano-Füllstoff [2] | | | 2 | | |

(fortgesetzt)

| Eigenschaften | | | | | |
|---|---|---|---|---|---|
| EG [3] | 46 | 46 | 49 | 47 | 20 |
| MVR [4] | 23 | 7 | 13 | 4 | 5 |
| E-Modul [5] | 1450 | 1495 | 1670 | 1500 | 1430 |
| RF [6] | 50 | 50 | 55 | 50 | 45 |
| RD [7] | 240 | 210 | 230 | 200 | 144 |
| KSZ 23°C [8] | 16 | 18 | 23 | 68 | 61 |
| KSZ -30°C [8] | 10 | 9 | 12 | 29 | 20 |
| SMF [9] | 26 | 33 | 37 | 31 | 46 |
| I [10] | 11,9 | 12,3 | 11,9 | 11,9 | 14,7 |
| SMF/I [11] | 2,2 | 2,7 | 3,1 | 2,6 | 3,1 |

**Legende zu Tabelle 2:**
[1] Als Additiv wurde Brüggolen M1251 (L. Brüggemann KG, DE) verwendet.
[2] Organisch modifiziertes Schichtsilikat
[3] EG = Summe der messbaren Endgruppen [mmol/kg]
[4] MVR = Melt Volumen Rate bei 275 °C und einer Belastung von 5 kg [ml/10min]
[5] E-Modul nach ISO527 [MPa]
[6] RF = Reissfestigkeit nach IS0527 [MPa]
[7] RD = Reissdehnung nach ISO527 [%]
[8] KSZ xx°C= Kerbschlagzähigkeit nach Charpy ISO179/2-1eA bei xx=23 bzw. xx=30°C [kJ/m$^2$]
[9] SMF = EMS-Norm, Schmelzefestigkeit gemessen bei 230 °C Manteltemperatur [s]
[10] I = Stromaufnahme bei der Extrusion [A], siehe Definition "Schmelzefestigkeit"
[11] SMF/I = Faktor Schmelzefestigkeit pro Stromaufnahme.

Um die Eignung der Formassen zu beurteilen, hat die Anmelderin ein eigenes Verfahren entwickelt, nach welchem die Beurteilung der Verarbeitbarkeit erfolgt. Dazu wurde die Schmelzefestigkeit (SMF) in Relation gesetzt zur Stromaufnahme des Extruders (I) während der Bestimmung der Schmelzefestigkeit.

Zur Bestimmung der SMF wird ein Schlauch kontinuierlich über einen Winkelkopf extrudiert. Als Messgrösse wird die Zeit verwendet, die der Schlauch benötigt, um den Abstand (z.B. 1 Meter) von der Düse bis zum Boden zurückzulegen. Bei der Messung der Schmelzefestigkeit wird mit einem konstanten Ausstoss und einem an den Polymertyp angepassten Temperaturprofil gefahren (vgl. Figur 2).

Wie aus Figur 2 hervorgeht, wird die Zeitmessung in dem Moment gestartet, wenn der kontinuierlich austretende Schmelzeschlauch an der Extrusionsdüse mit einem Spachtel abgestochen wird. Man stoppt dann die Zeit, sobald der neu austretende und nach unten wandernde Schlauchabschnitt den Boden berührt.

Ein Material, welches das zunehmende Eigengewicht (durch die laufend extrudierte Schmelze) schlecht tragen kann, d. h. sich viskos zu dehnen beginnt, wird sich stärker längen und dadurch die Spitze des Schmelzeschlauchs den Boden früher berühren, d. h. die kürzere Messzeit entspricht einer geringeren Schmelzefestigkeit.

Je höher der Wert SMF/I, desto besser lassen sich Formmassen mit hoher Schmelzefestigkeit extrudieren. Sowohl für die unmodifizierten (Tabelle 1) wie auch für die schlagzähmodifizierten Varianten wurden deutlich höhere Schmelzefestigkeitswerte im Vergleich zu den Vergleichsbeispielen bei nur gering erhöhten Stromaufnahme gemessen. Daraus resultiert ein höheres Verhältnis SMF/I.

Die Rohrextrusion in der Dimension d 110 x 10 mm (Aussendurchmesser 110 mm, Wandstärke 10 mm) wurde auf einem Extruder der Fa. Reiffenhäuser mit einem Schneckendurchmesser von 70 mm durchgeführt.

Die Versuche wurden mit einem leeren, gereinigten Extruder und Kopf gestartet. Das Anfahrmaterial (Vergleichsversuch 2) wurde in den leeren Extruder eingefahren.

V 1:    Vergleichsversuch 1
V 2:    Beispiel 6

Es konnten sehr einfach gute Rohre hergestellt werden.

Die Schmelzefestigkeit ist speziell bei Beispiel 6 (erfindungsgemäss) sehr gut, das Sagging war sehr gering.

In Figur 1 wird eine graphische Auswertung des Saggingverhaltens anhand der resultierenden Wanddicken von extrudierten Rohren mit einem Durchmesser von 110 mm und einer Wanddicke von 10 mm gezeigt. Das Rohr wird dabei horizontal mit mittig zentriertem Dorn extrudiert. Beim Sagging fliesst durch das Eigengewicht die Schmelze nach unten und das resultierende Rohr besitzt oben eine geringere Wanddicke als unten.

Zur quantitativen Erfassung wird der Quotient aus dickster Wandstärke und dünnster Wandstärke ermittelt:

$$f_{SMF} = d_{max.}/d_{min.}$$

Für Rohre aus Formmassen nach Beispiel 6 wird für diesen Quotienten $f_{SMF} = 1,01$ bestimmt während das Vergleichsbeispiel 1 einen Wert von $f_{SMF} = 1,15$ zeigt.

Bei Rohrleitungsbauteilen spielt unter anderem die Verschweissbarkeit eine Rolle, da die Rohre untereinander und mit Fittings verbunden werden müssen. Die Verschweissbarkeit ist vor allem von der Durchmischung der beiden Rohrleitungskomponenten abhängig, die aufgeschmolzen werden und mit einer Translationsbewegung miteinander vermischt werden. Die Durchmischung der beiden Fügefronten wird durch die Schmelzetemperatur und die Kraft die zur Durchmischung aufgewendet wird beeinflusst. Die nötige Mischkraft ist zwar bei Materialien mit grosser Molekülmasse höher, wird aber durch die höhere Viskosität der Schmelze automatisch höher.

Die Verschweissbarkeit wurde an Rohren mit einem Durchmesser von 32 mm und einer Wanddicke von 2,9 mm überprüft. Die Schweissnahtfestigkeit wurde dabei mittels Tieftemperaturzugversuch analog DIN EN 12814-6 ermittelt, dabei sollte ein Faktor grösser 0,8 für die Schweissnahtfestigkeit erreicht werden (1 bedeutet reines Material) und das Verarbeitungsfenster ergibt sich aus dem Aufheizfaktor, der sich wie folgt errechnet:

$$\text{Aufheizfaktor} = f_{AH} = \frac{t_{AW} \cdot (T_{HE} - T_{ST})}{1000} = \frac{t_{AW} \cdot (T_{HE} - 178)}{1000}$$

wobei $f_{AH}$ für den sogenannten Aufheizfaktor, $t_{AW}$ für die Schweisszeit, $T_{HE}$ für die Heizelementtemperatur bzw. Schweisstemperatur und $T_{ST}$ für die Schmelzetemperatur des Polymers stehen.

Bei der Verwendung folgender Schweissparameter für die Dimension d 32 x 2,9 mm: Schweisstemperatur: 230 °C, Schweisszeit: 20 s, Fügekraft: 0,15 N/mm², war die optische Beurteilung der Schweissnaht und die Klebeneigung für Beispiel 6 sehr gut (Schweissfaktor = 0,96), hingegen war für sie das Vergleichsbeispiel 1 nur befriedigend (Schweissfaktor = 0,86, optische Beurteilung schlecht).

Wie oben beschrieben ist das Verhalten der schnellen Rissfortplanzung (RCP) bei Kerbschlagbelastung ein kritischer Wert für Rohre unter Druck. Nach N. Brown, X. Lu, Plast. Rubb. Comp. Proc. Appl. 27(9) 415 (1998) kann dies durch einen Schlagversuch an Spritzgussprüflingen mit spezieller Kerbung abgeschätzt werden. Je höher die Kerbschlagfestigkeit des Materials, desto höher ist der RCP-Wert des entsprechend extrudierten Rohrmaterials.

ISO-Prüfstäbe der Beispiele 6, 8 und der Vergleichsbeispiele 1 und 2 wurden mit 2 mm tiefen und 0,3 mm breiten Schnitten versehen und an diesen an Anlehnung an ISO179/2 die Kerbschlagfestigkeit bei 0°C bestimmt.

Wie aus Tabelle 3 ersichtlich, zeigen die erfindungsgemässen Beispiele gegenüber dem Vergleichsextrusionsmaterial (Vgl. 1) ca. drei bis vierfach erhöhte Werte, gegenüber einem schlagzähmodifizierten Vergleichsmaterial (Vgl. 2) immer noch um ca. 20-70% verbesserte Ergebnisse.

Tabelle 3

|  | Vgl.1 | Vgl.2 | Bsp.6 | Bsp.8 |
|---|---|---|---|---|
| Kerbschlagfestigkeit [1] [kJ/m²] | 5,5 | 13,1 | 15,5 | 21,9 |
| [1] Nach N. Brown, X. Lu, Plast. Rubb. Comp. Proc. AppL 27(9) 415 (1998) mit spezieller Kerbung | | | | |

**Legende zu Figur 1:**

- -□- - Vergleichsbeispiel 1 mit $f_{SMF} = d_{max.}/d_{min.} = 1{,}15$
- -♦- Beispiel 6 mit $f_{SMF} = d_{max.}/d_{min.} = 1{,}01$

**Liste der verwendeten Abkürzungen**

EBA Ethylen-Butylacrylat-Copolymer
EPDM Ethylen-Propylen-Dien-Elastomer
EPM Ethylen-Propylen-Elastomer
EVA Ethylen-Vinylacetat-Copolymer
LCS Lower Confidential Limit
LTHS Long Term Hydrostatic Strength
MOP Maximum Operating Pressure
MRS Minimum Required Strength
SMF Schmelzefestigkeit

**Patentansprüche**

1. Hochviskose Formmassen auf Basis von Polyamiden enthaltend folgende Komponenten:

(a) 70 bis 100 Gew.-% einer Mischung bestehend aus 95 bis 10 Gewichtsteilen eines Polyamids PA11 oder PA12 mit einem zahlenmittleren Molekulargewicht ($M_n$) > 30.000 g/mol und aus 5 bis 90 Gewichtsteilen eines Polyamids PA11 oder PA12 mit einem zahlenmittleren Molekulargewicht ($M_n$) von 15.000 bis 30.000 g/mol, wobei die Summe der Gewichtsteile 100 ergibt,

und gegebenenfalls,

(b) 0 bis 25 Gew.-%, bevorzugt 0 bis 15 Gew.-%, mindestens eines polymeren Schlagzähmodifikators,
(c) 0 bis 5 Gew.-% weitere Additive, ausgewählt aus der Gruppe der UV- und Hitzestabilisatoren, der Antioxidantien, der Farbstoffe, der Viskositätserhöhungsmittel, der Pigmente, der Nukleierungsmittel, der Kristallisationsbeschleuniger, der Kristallisationsverzögerer, der Fließhilfsmittel, der Gleitmittel, der Entformungsmittel, der Flammschutzmittel sowie der Mittel, die die elektrische Leitfähigkeit verbessern, einschließlich Kohlenstoff-Nanotubes, wobei Glasfasern als Füllmaterialien ausgeschlossen sind,

wobei die Summe der Komponenten aus (a), (b) und (c) 100 Gew.-% ergibt.

2. Hochviskose Formmassen nach Anspruch 1, wobei die Mischung zu 90 bis 10 Gew.-% aus einem Polyamid PA11 oder PA12 mit einem mittleren Molekulargewicht ($M_n$) > 30.000 g/mol und zu 10 bis 90 Gew.-% aus einem Polyamid PA11 oder PA12 mit einem mittleren Molekulargewicht ($M_n$) von 15.000 bis 30.000 g/mol besteht.

3. Hochviskose Formmassen nach einem der Ansprüche 1 bis 2, **dadurch gekennzeichnet, dass** die Mischung zu 90 bis 50 Gew.-% aus einem Polyamid PA11 oder PA12 mit einem mittleren Molekulargewicht ($M_n$) von größer 30.000 g/mol und zu 10 bis 50 Gew.-% aus einem Polyamid PA11 oder PA12 mit einem mittleren Molekulargewicht ($M_n$) von 15.000 bis 30.000 g/mol besteht.

4. Hochviskose Formmassen nach einem der Ansprüche 1 bis 3, **dadurch gekennzeichnet, dass** die Mischung aus einem Polyamid PA11 oder PA12 mit einem mittleren Molekulargewicht von ($M_n$) > 30.000 g/mol und einem Polyamid PA11 oder PA12 mit einem mittleren Molekulargewicht ($M_n$) von 15.000 bis 25.000 g/mol besteht.

5. Hochviskose Formmassen nach einem der Ansprüche 1 bis 4, **dadurch gekennzeichnet, dass** das Polyamid PA11 oder PA12 mit einem zahlenmittleren Molekulargewicht ($M_n$) > 30.000 g/mol einen Endgruppengehalt von unter 66 mmol/kg aufweist.

6. Hochviskose Formmassen nach einem der Ansprüche 1 bis 5, **dadurch gekennzeichnet, dass** die Polyamide Polymerisate aus 11-Aminoundecansäure, 12-Aminododecansäure oder ω-Laurinlactam sind.

7. Hochviskose Formassen nach einem der Ansprüche 1 bis 6, **dadurch gekennzeichnet, dass** die eingesetzten Polyamide sich nur im mittleren Molekulargewicht ($M_n$) und/oder in den Endgruppen und/oder in dem Endgruppengehalt unterscheiden.

8. Hochviskose Formmassen nach einem der Ansprüche 1 bis 7, **dadurch gekennzeichnet, dass** den Formmassen weitere Polymere in Mengen von bis zu 30 Gew.-% pro 100 Gew.-Teilen der Polymermatrix zugesetzt sind.

9. Hochviskose Formmassen nach einem der Ansprüche 1 bis 8, **dadurch gekennzeichnet, dass** die hochviskose Polyamidkomponente mit Molekulargewicht ($M_n$) > 30.000 g/mol durch ein aufbauendes Additiv erzeugt wird.

10. Hochviskose Formmassen nach einem der Ansprüche 1 bis 9, **dadurch gekennzeichnet, dass** die Formmassen mindestens einen Schlagzähmodifikator enthalten.

11. Hochviskose Formmassen nach Anspruch 10, **dadurch gekennzeichnet, dass** die Schlagzähmodifikatoren ausgewählt sind aus der Gruppe der Copolymere auf Polyolefinbasis mit tiefer Glasumwandlungstemperatur, die mit polaren Gruppen, wie z.B. Carboxylgruppen oder Anhydridresten versehen sind, z.B. Polyethylen (LDPE, LLDPE), Ethylen/Propylen-, Ethylen/1-Buten-Copolymere, Ethylen-Propylen-Dien-Kautschuke (EPDM) und andere Copolymere mit (i) einem Monomeren von Ethylen oder alpha-Olefin oder gegebenenfalls einem Diolefin und (ii) mindestens einem Comonomeren, das unter Vinylestern gesättigter Carbonsäuren ausgewählt wird, ungesättigten Mono- und Dicarbonsäuren, deren Estern und Salzen und Dicarbonsäureanhydriden, der maleinsäuremodifizierten Blockcopolymeren SBS, SIS oder SEBS oder Acrylatkautschuke, Ethylen-Butylacrylat-Copolymere (EBA) oder Ethylen-Vinylacetat-Copolymere (EVA).

12. Hochviskose Formmassen nach einem der Ansprüche 1 bis 11, **dadurch gekennzeichnet, dass** in der Formmasse weitere Additive enthalten sind.

13. Hochviskose Formmassen nach Anspruch 12, **dadurch gekennzeichnet, dass** die Additive aus der Gruppe der Hitze- und UV-Stabilisatoren ausgewählt sind.

14. Hochviskose Formmassen nach einem der Ansprüche 1 bis 13, **dadurch gekennzeichnet, dass** in den Formmassen nanoskalige Füllstoffe, bei denen mindestens eine Dimension kleiner 500 nm ist, enthalten sind.

15. Hochviskose Formmassen nach Anspruch 14, **dadurch gekennzeichnet, dass** die nanoskaligen Füllstoffe ausgewählt sind aus der Gruppe der Oxide, Oxidhydrate von Metallen oder Halbmetallen.

16. Hochviskose Formmassen nach einem der Ansprüche 1 bis 15, **dadurch gekennzeichnet, dass** die Polyamidformmasse in der Polyamid-Matrix als Füllstoff ein gleichmässig dispergiertes, schichtförmiges Mineral, welches vor dem Einarbeiten in die Polyamid-Matrix eine Schichtdicke von 0,7 bis 1,2 nm und einen Zwischenschichtabstand der Mineralschichten von bis zu 5 nm aufweist, enthält.

17. Hochviskose Formmassen nach dem vorhergehenden Anspruch, **dadurch gekennzeichnet, dass** das Mineral mit einem Aktivierungs- bzw. Modifizierungsmittel aus der Gruppe der Triazine, der Ammoniumsalze von primären Aminen mit mindestens 6 Kohlenstoffatomen wie Hexanamin, Decanamin, Dodecanamin, Stearylamin, hydrierten Fettsäureaminen oder quarternären Ammoniumverbindungen, Ammoniumsalzen von $\alpha$-,$\omega$-Aminosäuren mit mindestens 6 Kohlenstoffatomen, sowie Sulfonium- oder Phosphoniumsalzen behandelt worden ist.

18. Hochviskose Formmassen nach Anspruch 14, **dadurch gekennzeichnet, dass** die nanoskaligen Füllstoffe Schichtsilikate, aus der Gruppe aus Montmorillonit, Saponit, Beidellit, Nontronit, Hektorit, Stevensit, Vermiculit, Illite, Pyrosit, der Gruppe der Kaolin- und Serpentin-Minerale, Doppelhydroxide, Graphit, oder solche Füllstoffe auf Basis vom Siliconen, Silica oder Silsesquioxanen sind, wobei Schichtsilikate besonders bevorzugt sind.

19. Hochviskose Formmassen nach einem der Ansprüche 1 bis 18, **gekennzeichnet durch** eine geringe Tendenz zum Sagging, definiert **durch** einen Faktor $f_{SMF}$ = (dickste Wanddicke)/(dünnste Wanddicke) von kleiner 1,1, bevorzugt von kleiner 1,05, von Querschnitten horizontal extrudierter Rohre unter Verwendung eines mittig zentrierten Dorns.

20. Verwendung der Formmassen nach einem oder mehreren der Ansprüche 1 bis 19 zur Herstellung von Formteilen durch Extrusion, Coextrusion, Extrusionsblasformen, 3D-Blasformen, Coextrusionsblasformen, Coextrusions-3D-Blasformen, Coextrusions-Saugblasformen, sequentielle Coextrusion oder Spritzgiessen.

21. Verwendung der Formmassen nach einem oder mehreren der Ansprüche 1 bis 19 zur Herstellung von ein- oder mehrschichtigen Rohren mit grossem Durchmesser, insbesondere von grösser 20 mm Aussendurchmesser, ganz besonders bevorzugt von grösser als 30 mm Aussendurchmesser.

22. Verwendung der Formmassen nach einem oder mehreren der Ansprüche 1 bis 19 zur Herstellung von ein- oder mehrschichtigen Rohren zum Transport von Fluiden, insbesondere von Gas, chemischen Stoffen oder von ein- oder mehrschichtigen Rohren zur Anwendung im Offshore-Bereich.

**Claims**

1. Highly viscous moulding compositions based on polyamides containing the following components:

    (a) 70 to 100 wt.% of a mixture consisting of 95 to 10 parts by weight of a polyamide PA11 or PA12 with a number-average molecular weight ($M_n$) > 30,000 g/mol and 5 to 90 parts by weight of a polyamide PA11 or PA12 with a number-average molecular weight ($M_n$) of 15,000 to 30,000 g/mol, wherein the sum of the parts by weight is 100,

    and optionally

    (b) 0 to 25 wt.%, preferably 0 to 15 wt.%, of at least one polymeric impact modifier,
    (c) 0 to 5 wt.% other additives, selected from the group of UV and heat stabilisers, antioxidants, dyes, viscosity increasers, pigments, nucleating agents, crystallisation accelerators, crystallisation retarders, flow auxiliaries, lubricants, mould release agents, flame retardants and agents that improve electrical conductivity, including carbon nanotubes, with glass fibres being excluded as filler materials,

    wherein the sum of the components from (a), (b) and (c) is 100 wt.%.

2. Highly viscous moulding compositions according to claim 1, wherein the mixture consists of 90 to 10 wt.% of a polyamide PA11 or PA12 with an average molecular weight ($M_n$) > 30,000 g/mol and 10 to 90 wt.% of a polyamide PA11 or PA12 with an average molecular weight ($M_n$) of 15,000 to 30,000 g/mol.

3. Highly viscous moulding compositions according to one of claims 1 to 2, **characterised in that** the mixture consists of 90 to 50 wt.% of a polyamide PA11 or PA12 with an average molecular weight ($M_n$) of more than 30,000 g/mol and 10 to 50'wt.% of a polyamide PA11 or PA12 with an average molecular weight ($M_n$) of 15,000 to 30,000 g/mol.

4. Highly viscous moulding compositions according to one of claims 1 to 3, **characterised in that** the mixture consists of a polyamide PA11 or PA12 with an average molecular weight of ($M_n$) > 30,000 g/mol and a polyamide PA11 or PA12 with an average molecular weight ($M_n$) of 15,000 to 25,000 g/mol.

5. Highly viscous moulding compositions according to one of claims 1 to 4, **characterised in that** the polyamide PA11 or PA12 with a number-average molecular weight ($M_n$) > 30,000 has an end group content of less than 66 mmol/kg.

6. Highly viscous moulding compositions according to one of claims 1 to 5, **characterised in that** the polyamides are polymers of 11-aminoundecanoic acid, 12-aminododecanoic acid or ω-laurolactam.

7. Highly viscous moulding compositions according to one of claims 1 to 6, **characterised in that** the polyamides used differ only in the average molecular weight ($M_n$) and/or in the end groups and/or in the end group content.

8. Highly viscous moulding compositions according to one of claims 1 to 7, **characterised in that** additional polymers are added to the moulding compositions in quantities of up to 30 wt.% per 100 parts by weight of the polymer matrix.

9. Highly viscous moulding compositions according to one of claims 1 to 8, **characterised in that** the highly viscous polyamide component with a molecular weight ($M_n$) > 30,000 g/mol is produced by a molecular-weight-increasing additive.

10. Highly viscous moulding compositions according to one of claims 1 to 9, **characterised in that** the moulding compositions contain at least one impact modifier.

11. Highly viscous moulding compositions according to claim 10, **characterised in that** the impact modifiers are selected from the group of the polyolefin-based copolymers with a low glass transition temperature, which are provided with polar groups, such as e.g. carboxyl groups or anhydride residues, e.g. polyethylene (LDPE, LLDPE.), ethylene/propylene, ethylene/1-butene copolymers, ethylene-propylene-diene rubbers (EPDM) and other copolymers with (i) a monomer of ethylene or alpha-olefin or optionally a diolefin and (ii) at least one comonomer which is selected among vinyl esters of saturated carboxylic acids, unsaturated mono- and dicarboxylic acids, the esters and salts thereof and dicarboxylic acid anhydrides, the maleic acid-modified block copolymers SBS, SIS or SEBS or acrylate rubbers, ethylene-butyl acrylate copolymers (EBA) or ethylene-vinyl acetate copolymers (EVA).

12. Highly viscous moulding compositions according to one of claims 1 to 11, **characterised in that** further additives are contained in the moulding composition.

13. Highly viscous moulding compositions according to claim 12, **characterised in that** the additives are selected from the group of the heat stabilisers and UV stabilisers.

14. Highly viscous moulding compositions according to one of claims 1 to 13, **characterised in that** nanoscale fillers in which at least one dimension is smaller than 500 nm are contained in the moulding compositions.

15. Highly viscous moulding compositions according to claim 14, **characterised in that** the nanoscale fillers are selected from the group of the oxides, oxide hydrates of metals or semimetals.

16. Highly viscous moulding compositions according to one of claims 1 to 15, **characterised in that** the polyamide moulding composition contains as a filler in the polyamide matrix a uniformly dispersed, laminar mineral which, before being incorporated into the polyamide matrix, has a layer thickness of 0.7 to 1.2 nm and an interlayer spacing of the mineral layers of up to 5 nm.

17. Highly viscous moulding compositions according to the preceding claim, **characterised in that** the mineral has been treated with an activating or modifying agent from the group of the triazines, ammonium salts of primary amines with at least 6 carbon atoms, such as hexanamine, decanamine, dodecanamine, stearylamine, hydrogenated fatty acid amines or quaternary ammonium compounds, ammonium salts of $\alpha$-,$\omega$-amino acids with at least 6 carbon atoms, and sulfonium or phosphonium salts.

18. Highly viscous moulding compositions according to claim 14, **characterised in that** the nanoscale fillers are layered silicates from the group of montmorillonite, saponite, beidellite, nontronite, hectorite, stevensite, vermiculite, illite, pyrosite, the group of the kaolin and serpentine minerals, double hydroxides, graphite, or those fillers based on silicones, silica or silsesquioxanes, with layered silicates being particularly preferred.

19. Highly viscous moulding compositions according to one of claims 1 to 18, **characterised by** a low sagging tendency, defined by a factor $f_{SMF}$ = (thickest wall thickness)/(thinnest wall thickness) of less than 1.1, preferably of less than 1.05, of cross sections of horizontally extruded pipes using an axially centred mandrel.

20. Use of the moulding compositions according to one or more of claims 1 to 19 for the production of mouldings by extrusion, coextrusion, extrusion blow moulding, 3D blow moulding, coextrusion blow moulding, coextrusion 3D blow moulding, coextrusion suction blow moulding, sequential coextrusion or injection moulding.

21. Use of the moulding compositions according to one or more of claims 1 to 19 for the production of single- or multi-layer pipes with a large diameter, in particular of greater than 20 mm external diameter, more particularly preferably of greater than 30 mm external diameter.

22. Use of the moulding compositions according to one or more of claims 1 to 19 for the production of single- or multi-layer pipes for the transport of fluids, in particular of gas, chemical substances, or of single- or multi-layer pipes for use in the offshore sector.

**Revendications**

1. Matière à mouler à haute viscosité à base de polyamides contenant les composants suivants :

(a) 70 à 100 % en poids d'un mélange constitué de 95 à 10 parties en poids d'un polyamide PA11 ou PA12 présentant un poids moléculaire moyen en nombre ($M_n$) > 30 000 g/mol et de 5 à 90 parties en poids d'un polyamide PA11 ou PA12 présentant un poids moléculaire moyen en nombre ($M_n$) de 15 000 à 30 000 g/mol, la somme des parties en poids donnant 100,

et le cas échéant,

(b) 0 à 25 % en poids, de préférence 0 à 15 % en poids, d'au moins un polymère modificateur de résilience,

(c) 0 à 5 % en poids d'autres additifs choisis dans le groupe constitué des stabilisateurs UV et des stabilisateurs thermiques, des antioxydants, des colorants, des agents viscosants, des pigments, des agents nucléants, des agents accélérateurs de cristallisation, des agents retardateurs de cristallisation, des agents fluidifiants, des lubrifiants, des agents de démoulage, des agents ignifuges ainsi que des agents qui améliorent l'électroconductivité, y compris les nanotubes de carbone, les fibres de verre étant exclues comme matériaux de charge, la somme des composants des points (a), (b) et (c) donnant 100 % en poids.

2. Matière à mouler à haute viscosité selon la revendication 1, dans laquelle le mélange se compose de 90 à 10 % en poids d'un polyamide PA11 ou PA12 présentant un poids moléculaire moyen ($M_n$) > 30 000 g/mol et de 10 à 90 % en poids d'un polyamide PA11 ou PA12 présentant un poids moléculaire moyen ($M_n$) de 15 000 à 30 000 g/mol.

3. Matière à mouler à haute viscosité selon l'une quelconque des revendications 1 et 2, **caractérisée en ce que** le mélange se compose de 90 à 50 % en poids d'un polyamide PA11 ou PA12 présentant un poids moléculaire moyen ($M_n$) supérieur à 30 000 g/mole et de 10 à 50 % en poids d'un polyamide PA11 ou PA12 présentant un poids moléculaire moyen ($M_n$) de 15 000 à 30 000 g/mol.

4. Matière à mouler à haute viscosité selon l'une quelconque des revendications 1 à 3, **caractérisée en ce que** le mélange se compose d'un polyamide PA11 ou PA12 présentant un poids moléculaire moyen ($M_n$) > 30 000 g/mol et d'un polyamide PA11 ou PA12 présentant un poids moléculaire moyen ($M_n$) de 15 000 à 25 000 g/mol.

5. Matière à mouler à haute viscosité selon l'une quelconque des revendications 1 à 4, **caractérisée en ce que** le polyamide PA11 ou PA12 présentant un poids moléculaire moyen en nombre ($M_n$) > 30 000 g/mol présente une teneur en groupements terminaux inférieure à 66 mmol/kg.

6. Matière à mouler à haute viscosité selon l'une quelconque des revendications 1 à 5, **caractérisée en ce que** les polyamides sont des polymères constitués d'acide 11-amino-undécanoïque, d'acide 12-amino-dodécanoïque ou de ω-lauryllactame.

7. Matière à mouler à haute viscosité selon l'une quelconque des revendications 1 à 6, **caractérisée en ce que** les polyamides utilisés ne se différencient entre eux que par leur poids moléculaire moyen ($M_n$) et/ou leurs groupements terminaux et/ou leur teneur en groupements terminaux.

8. Matière à mouler à haute viscosité selon l'une quelconque des revendications 1 à 7, **caractérisée en ce que** l'on ajoute à la matière à mouler d'autres polymères en quantités jusqu'à 30 % en poids pour 100 parties en poids de la matrice polymère.

9. Matière à mouler à haute viscosité selon l'une quelconque des revendications 1 à 8, **caractérisée en ce que** le composant de polyamide à haute viscosité avec un poids moléculaire ($M_n$) > 30 000 g/mol est produit par le biais d'un additif constitutif.

10. Matière à mouler à haute viscosité selon l'une quelconque des revendications 1 à 9, **caractérisée en ce que** la matière à mouler contient au moins un modificateur de résilience.

11. Matière à mouler à haute viscosité selon la revendication 10, **caractérisée en ce que** les modificateurs de résilience sont choisis dans le groupe constitué des copolymères à base de polyoléfines présentant une température de transition vitreuse basse, qui sont pourvus de groupements polaires, par exemple de groupements carboxyle ou de résidus d'anhydride, par exemple, du polyéthylène (LDPE, LLDPE), des copolymères d'éthylène-propylène ou d'éthylène/1-butène, des caoutchoucs d'éthylène-propylène-diène (EPDM) et d'autres copolymères obtenus avec (i) un monomère d'éthylène ou d'alpha-oléfine ou, le cas échéant, une dioléfine et (ii) au moins un comonomère, choisi parmi les esters vinyliques d'acides carboxyliques saturés, les acides mono- et dicarboxyliques insaturés, leurs esters et sels et anhydrides d'acides dicarboxyliques, les copolymères séquencés SBS, SIS ou SEBS modifiés avec de l'acide maléique ou les caoutchoucs d'acrylate, les copolymères d'éthylène-acrylate de butyle (EBA) ou les copolymères d'éthylène-acétate de vinyle (EVA).

**12.** Matière à mouler à haute viscosité selon l'une quelconque des revendications 1 à 11, **caractérisée en ce que** d'autres additifs sont contenus dans la matière à mouler.

**13.** Matière à mouler à haute viscosité selon la revendication 12, **caractérisée en ce que** les additifs sont choisis dans le groupe des stabilisateurs thermiques et des stabilisateurs aux UV.

**14.** Matière à mouler à haute viscosité selon l'une quelconque des revendications 1 à 13, **caractérisée en ce que** dans la matière à mouler sont contenus des matériaux de charge à l'échelle nanométrique, qui présentent au moins une dimension inférieure à 500 nm.

**15.** Matière à mouler à haute viscosité selon la revendication 14, **caractérisée en ce que** les matériaux de charge à l'échelle nanométrique sont choisis dans le groupe des oxydes et des hydroxydes de métaux ou de semi-métaux.

**16.** Matière à mouler à haute viscosité selon l'une quelconque des revendications 1 à 15, **caractérisée en ce que** la matière à mouler polyamide qui se trouve dans la matrice de polyamide contient, comme matériau de charge, un minéral stratiforme dispersé de manière homogène, qui, avant incorporation à la matrice de polyamide, présente une épaisseur de couche de 0,7 à 1,2 nm et une distance inter-couche des couches minérales allant jusqu'à 5 nm.

**17.** Matière à mouler à haute viscosité selon la revendication précédente, **caractérisée en ce que** le minéral a été traité avec un agent d'activation ou de modification du groupe constitué des triazines, des sels d'ammonium d'amines primaires ayant au moins 6 atomes de carbone, tels que l'hexanamine, la décanamine, la dodécanamine, la stéarylamine, des amines de l'acide gras hydrogénées ou des composés d'ammonium quaternaire, des sels d'ammonium à partir d'acides $\alpha$-,$\omega$-aminés ayant au moins 6 atomes de carbone ainsi que des sels de sulfonium ou de phosphonium.

**18.** Matière à mouler à haute viscosité selon la revendication 14, **caractérisée en ce que** les matériaux de charge à l'échelle nanométrique sont des silicates stratifiés du groupe constitué de la montmorillonite, de la saponite, de la beidellite, de la nontronite, de l'hectorite, de la stevensite, de la vermiculite, de l'illite, de la pyrosite, du groupe constitué des minéraux de kaolin et de serpentine, des hydroxides doubles, du graphite ou **en ce que** les matériaux de charge sont à base de silicone, de silice ou de silsesquioxanes, les silicates stratifiés étant particulièrement préférés.

**19.** Matière à mouler à haute viscosité selon l'une quelconque des revendications 1 à 18, **caractérisée par** une faible tendance à l'affaissement, définie par un facteur $f_{SMF}$ = (épaisseur de paroi la plus élevée) / (épaisseur de paroi la plus mince) inférieure à 1,1, de préférence, inférieure à 1,05, de coupes transversales de tubes extrudés horizontalement avec l'utilisation d'un mandrin centré centriquement.

**20.** Utilisation de la matière à mouler selon une ou plusieurs des revendications 1 à 19, pour la fabrication de pièces mises en forme par extrusion, co-extrusion, extrusion-soufflage, soufflage 3D, co-extrusion par soufflage, co-extrusion par soufflage 3D, co-extrusion par aspiration-soufflage, co-extrusion séquentielle ou moulage par injection.

**21.** Utilisation de la matière à mouler selon une ou plusieurs des revendications 1 à 19 pour la fabrication de tubes monocouches ou multicouches présentant un grand diamètre, en particulier un diamètre externe supérieur à 20 mm, de préférence toute particulière un diamètre externe supérieur à 30 mm.

**22.** Utilisation de la matière à mouler selon une ou plusieurs des revendications 1 à 19, pour la fabrication de tubes monocouches ou multicouches pour le transport de fluides, en particulier de gaz, de matières chimiques, ou de tubes monocouches ou multicouches pour une utilisation dans le secteur offshore.

Figur 1: Vergleich im Saggingverhalten an 110 x 10 mm Rohren von verschiedenen Formulierungen; angegeben sind die Wanddicken in Abhängigkeit von der Position: 12 = oben, 6 = unten.

Start

Vorformling

Stop

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 359286
- US 2143944 A
- US 3821171 A
- DE 1210183
- DD 91566
- WO 0066650 A
- DE 10337707
- WO 0166633 A
- WO 03066704 A
- WO 09847940 A1
- JP 0197526 A
- JP 01236238 A
- DE 2458733 B
- WO 09634909 A1
- EP 0559284 A
- JP 61179258 A
- US 5112908 A

- EP 0957131 B1
- US 20040030023 A
- EP 1029896 A1
- US 6211266 B1
- US 5446109 A
- DE 4235505 A1
- EP 0592941 A2
- EP 0555197 A2
- US 5369171 A
- EP 0494449 A2
- WO 03000772 A2
- EP 0355547 A1
- DE 19537614 C3
- EP 0818491 B
- EP 1394197 A1
- US 20050005989 A, Roloff, D.

**In der Beschreibung aufgeführte Nicht-Patentliteratur**

- Polyamide. Kunststoff-Handbuch. Carl Hanser Verlag, 1998, 3-632, 45-51651-658
- **F. N. Cogswell.** Polymer melt rheology. John Wiley & Sons, 1981
- Nylon plastics handbook. Carl Hanser Verlag, 1995, 34-48

- Hyperion Catalysis International. **A. Rich ; P. Collins ; J. Hagerstrom.** Nanotubes for Conductive Plastics Move to the Next Performance Level. Society of Automotive Engineers, Inc, 2002
- **Nach N. Brown ; X. Lu.** *Plast. Rubb. Comp. Proc. Appl.,* 1998, vol. 27 (9), 415
- **N. Brown ; X. Lu.** *Plast. Rubb. Comp. Proc. AppL,* 1998, vol. 27 (9), 415